# EUROPEAN PATENT APPLICATION

(11) **EP 4 571 474 A1**
(43) Date of publication of application: **18.06.2025**
(21) Application number: 22954962.1
(22) Date of filing: 10.08.2022
(51) Int. Cl.: G06F 3/0484, A63F 13/22, G06F 3/0338

(54) **INFORMATION PROCESSING DEVICE, INFORMATION PROCESSING SYSTEM, AND COMPUTER PROGRAM**

(71) Applicant: Sony Interactive Entertainment Inc., Tokyo 108-0075 (JP)
(72) Inventor: OGAWA Tomohiro, Tokyo 108-0075 (JP); NISHIDA Makoto, Tokyo 108-0075 (JP); OGISO Toru, Tokyo 108-0075 (JP)
(74) Representative: D Young & Co LLP
(86) International application number: PCT/JP2022/030536
(87) International publication number: WO 2024/034044

(57) **Abstract**

An information processing device 10 includes an acquisition unit and a display control unit. The acquisition unit of the information processing device 10 acquires setting information stored in a controller 6 and associated with a manipulation of the controller 6. The display control unit of the information processing device 10 causes a display device 4 to display information corresponding to the setting information acquired by the acquisition unit and associated with the manipulation of the controller 6, in response to detection of input of a predetermined manipulation using a first button provided on the controller 6, during execution of an application.

## Description

### [Technical Field]

The present invention relates to an information processing device, an information processing system, and a computer program.

### [Background Art]

In recent years, such a controller which is capable of storing setting information (hereinafter also referred to as a "profile") associated with manipulations of a controller and customized by a user has increasingly come into widespread use.

### [Summary]

### [Technical Problem]

With the prospect that the number of profiles storable in the controller will increase in the future, there is a demand for development of such a mechanism which enables a user to easily check information associated with the profiles stored in the controller.

An object of the present invention is to provide a technology which provides assistance to the user for easy checking of information associated with profiles stored in a controller.

### [Solution to Problem]

For solving the abovementioned problem, an information processing device according to an aspect of the present invention includes an acquisition unit that acquires setting information stored in a manipulation device and associated with a manipulation of the manipulation device, and a display control unit that causes a display unit to display information corresponding to the setting information acquired by the acquisition unit and associated with the manipulation of the manipulation device, in response to detection of input of a predetermined manipulation using a first button provided on the manipulation device, during execution of an application.

Another aspect of the present invention is directed to an information processing device. This device includes a processor. The processor executes a step of acquiring setting information stored in a manipulation device and associated with a manipulation of the manipulation device, and a step of causing a display unit to display information corresponding to the setting information acquired in the acquiring step and associated with the manipulation of the manipulation device, in response to detection of input of a predetermined manipulation using a first button provided on the manipulation device, during execution of an application.

A further aspect of the present invention is directed to an information processing system. This information processing system includes an information processing device that executes an application and a manipulation device. The manipulation device stores setting information associated with a manipulation of the manipulation device, and the information processing device includes an acquisition unit that acquires setting information stored in the manipulation device and associated with the manipulation of the manipulation device, and a display control unit that causes a display unit to display information corresponding to the setting information acquired by the acquisition unit and associated with the manipulation of the manipulation device, in response to detection of input of a predetermined manipulation using a first button provided on the manipulation device, during execution of the application.

Note that any combinations of the constituent elements and expressions of the present invention as described above which are converted into such forms as a method, a computer program, and a recording medium storing a computer program are also effective as modes of the present invention.

### [Advantageous Effect of Invention]

The present invention provides assistance to the user for easy checking of information associated with profiles stored in a controller.

### [Brief Description of Drawings]

[FIG. 1]

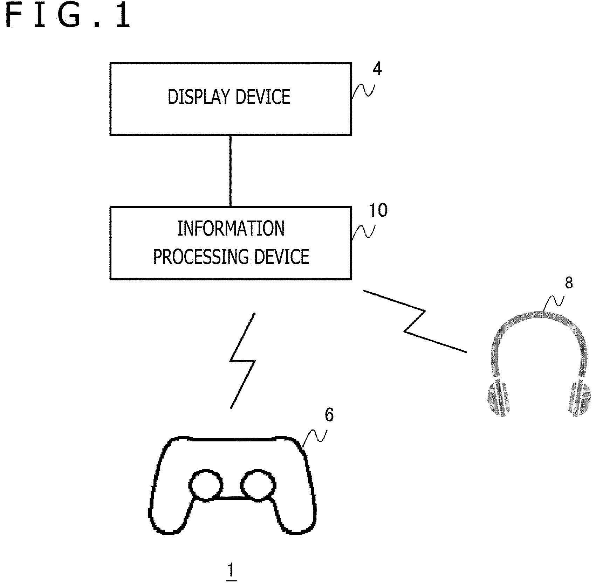

   FIG. 1 is a diagram illustrating an information processing system according to an embodiment.
[FIG. 2]

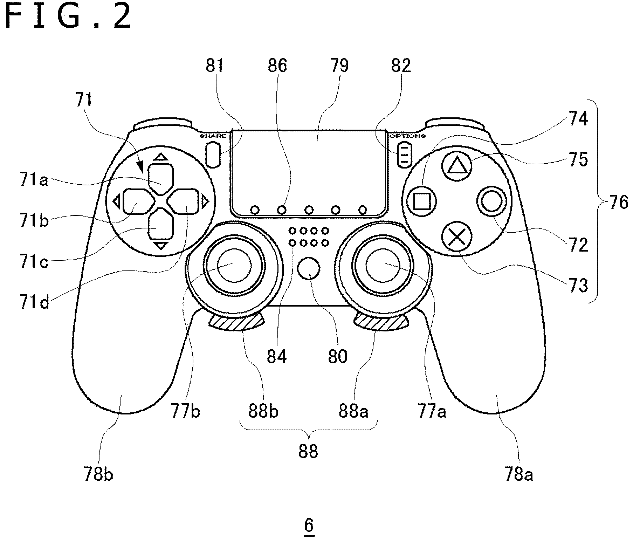

   FIG. 2 is a view illustrating an upper surface of a controller.
[FIG. 3]

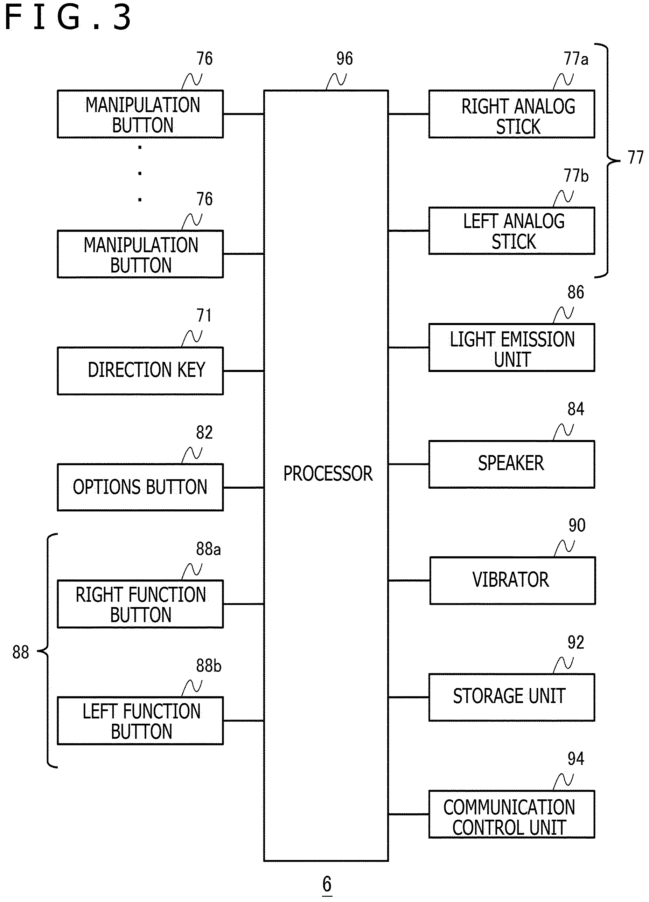

   FIG. 3 is a diagram illustrating a hardware configuration of a controller.
[FIG. 4]

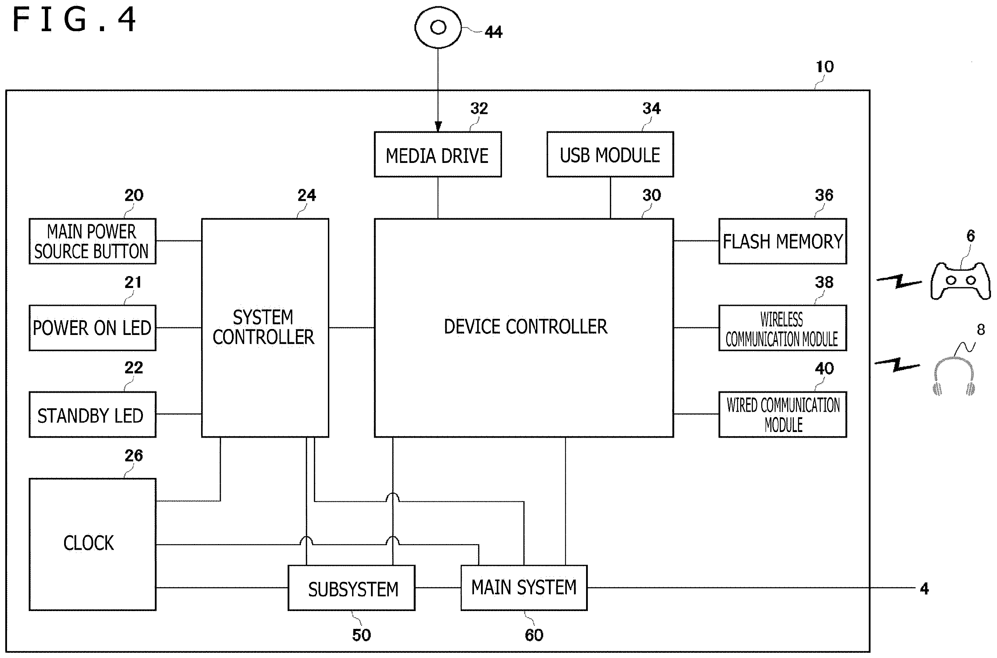

   FIG. 4 is a diagram illustrating a hardware configuration of an information processing device.
[FIG. 5]

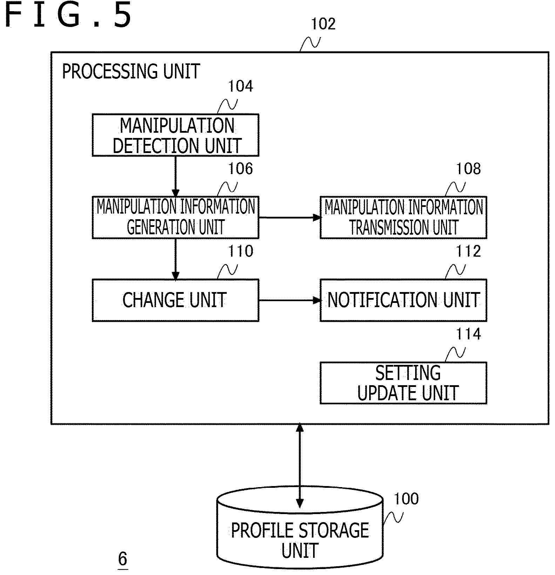

   FIG. 5 is a block diagram illustrating function blocks of the controller.
[FIG. 6]

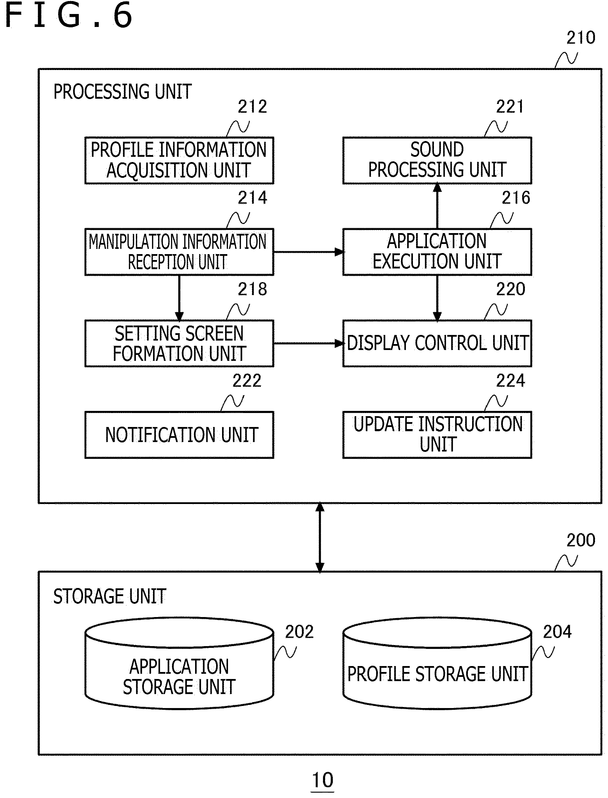

   FIG. 6 is a block diagram illustrating function blocks of the information processing device.
[FIG. 7]

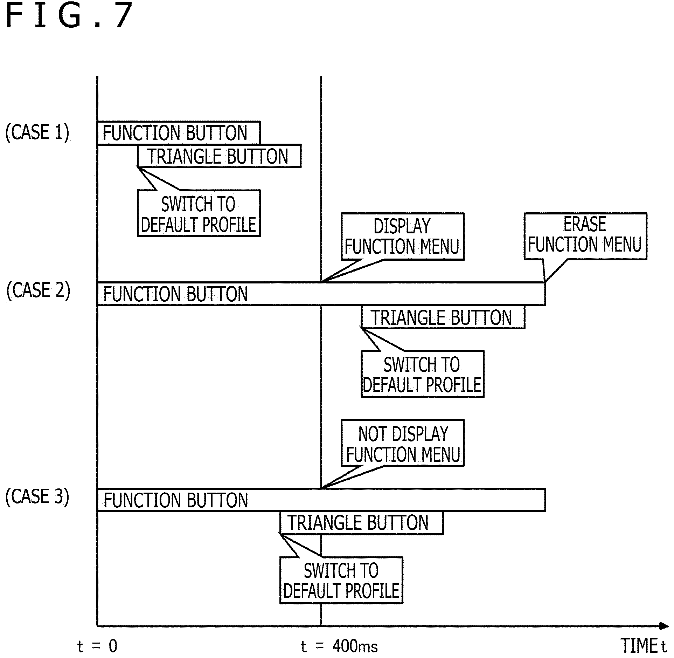

   FIG. 7 is a diagram illustrating an example of profile switching using a function button.
[FIG. 8]

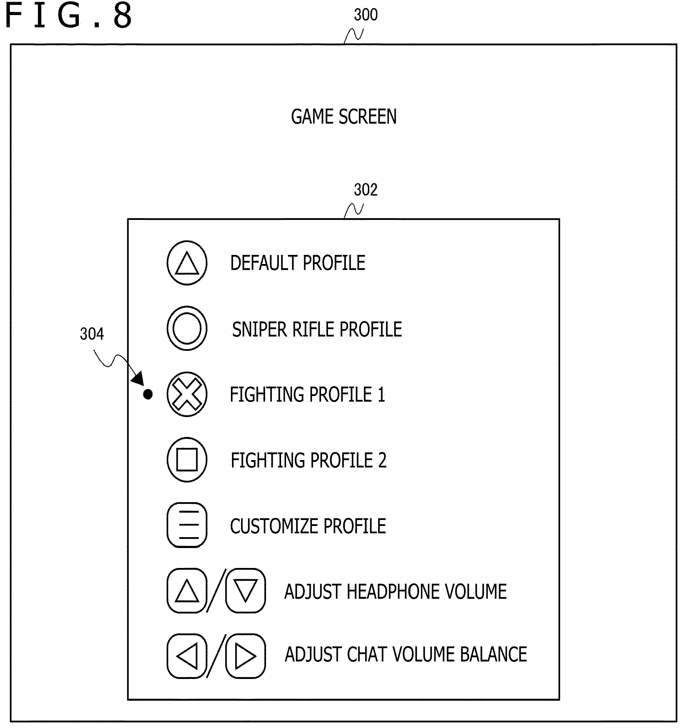

   FIG. 8 is a diagram illustrating an example of a function menu window.
[FIG. 9]

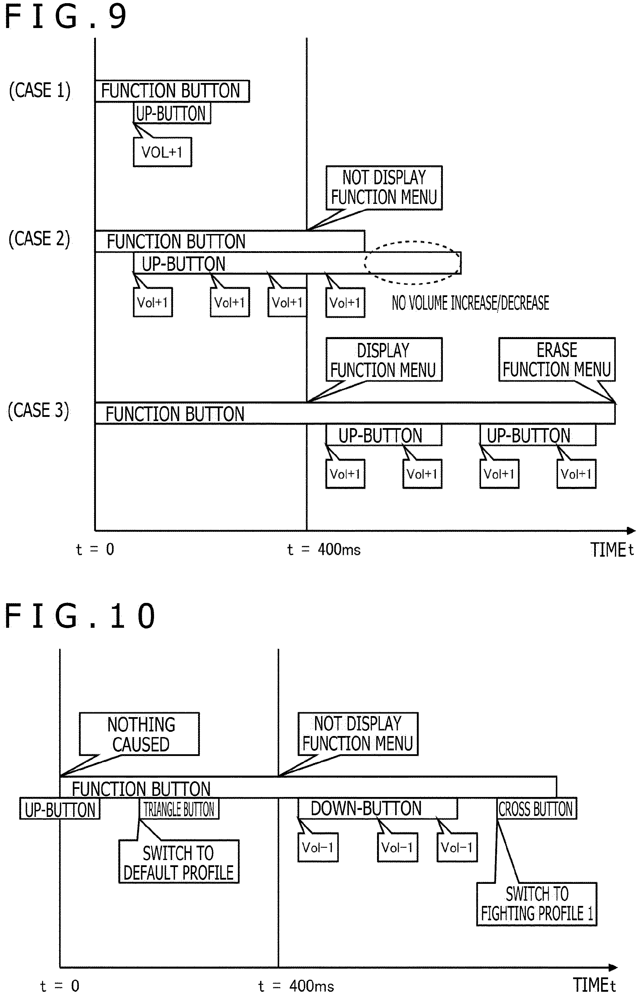

   FIG. 9 is a diagram illustrating an example of a sound output change using the function button.
[FIG. 10]
   FIG. 10 is a diagram illustrating an example which executes both profile switching and a sound output change by using the function button.
[FIG. 11]

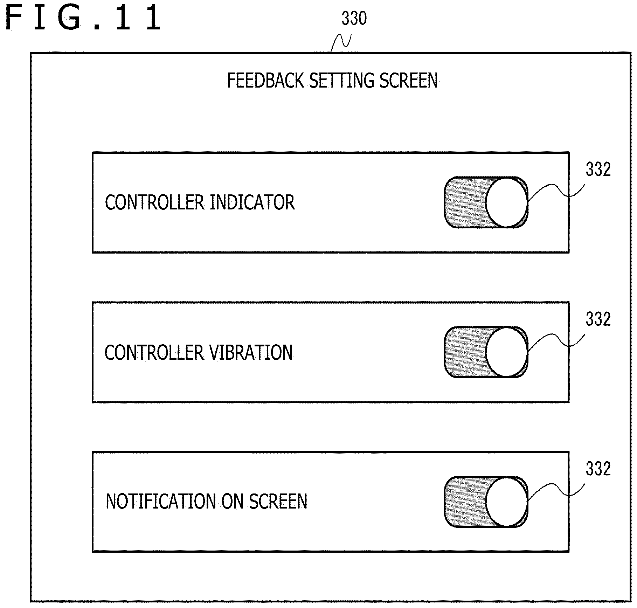

   FIG. 11 is a diagram illustrating an example of a feedback setting screen.
[FIG. 12]

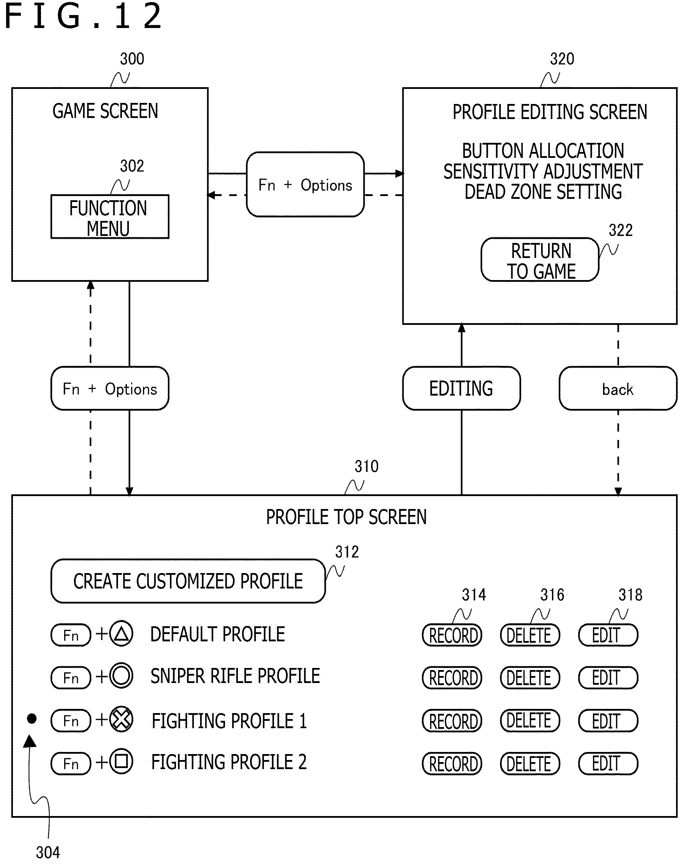

   FIG. 12 is a diagram schematically illustrating a screen transition associated with setting of a profile.

### [Description of Embodiment]

FIG. 1 illustrates an information processing system 1 according to an embodiment. The information processing system 1 includes an information processing device 10, a display device 4, a controller 6, and a headphone 8. The information processing device 10 according to the embodiment is a game device, such as a stationary type game device. The information processing device 10 is connected wirelessly or by wire with the controller 6 operated by a user. The controller 6 is a manipulation device which receives manipulations input from the user for information processing (a game according to the embodiment) executed by the information processing device 10. The controller 6 sequentially transmits to the information processing device 10 manipulation information indicating a manipulation input from the user. The controller 6 can also be expressed as a game controller.

The headphone 8 is a device which includes a sound emitter (e.g., a speaker), and outputs from the sound emitter audible sounds corresponding to electric signals transmitted from the information processing device 10. Note that the information processing system 1 may include an earphone, a speaker of the display device 4, or a speaker built in the controller 6, as sound output means instead of the headphone 8.

The display device 4 may be a television set including a display for outputting images and a speaker for outputting sounds, or may be a computer display. The display device 4 may be connected to the information processing device 10 via a cable, or may be wirelessly connected to the information processing device 10. When receiving manipulation information provided from the controller 6, the information processing device 10 reflects this manipulation information in processing performed by system software or application software, causes the display device 4 to display images associated with a processing result, and causes the headphone 8 to output sounds associated with a processing result.

First to third features of the information processing system 1 will be explained as an outline of the information processing system 1 according to the embodiment.

The controller 6 according to the embodiment is capable of storing setting information associated with manipulations of the controller and customized by the user. The setting information associated with the controller 6 may be information including setting values or the like determined beforehand with regard to manipulations of the controller 6. Moreover, the setting information associated with the controller 6 may be setting information associated with generation of manipulation information input to the information processing device 10 according to manipulations input to the controller 6. Further, the setting information associated with the controller 6 may be setting information associated with a change of an image generation mode provided by the information processing device 10 or an image display mode provided by the display device 4 according to manipulations input to the controller 6. In addition, the setting information associated with the controller 6 may be setting information associated with a change of an output mode of sounds from the information processing device 10, the headphone 8, or the like according to manipulations input to the controller 6. Besides, the setting information associated with the controller 6 may be setting information associated with a change of a chat mode according to manipulations input to the controller 6.

According to the embodiment, the setting information associated with the controller will also be referred to as "profile information" or simply a "profile." A specific example of the profile information will hereinafter be described. The profile information includes an identification (ID) and a name of a profile, button allocation information, sensitivity information, dead zone information, and corresponding button information. The button allocation information is information indicating various types of actions, commands, and functions allocated to respective buttons of the controller 6 by the user. In other words, the button allocation information is information indicating a situation allocation of various types of actions, commands, and functions to the respective buttons. The corresponding button information is identification information associated with buttons of the controller 6 with each of which the corresponding profile information is associated, such as information indicating a circle button 72 and a cross button 73 described below.

The sensitivity information is information indicating a setting value associated with sensitivity of analog sticks of the controller 6. The sensitivity of the analog sticks specifies a manipulation amount recognized by the information processing device 10 in correspondence with a manipulation amount actually input to the analog sticks by the user (i.e., tilt amount). The manipulation amount recognized by the information processing device 10 is also considered as a manipulation amount input to data processing performed by the information processing device 10. The setting value of the sensitivity may be a ratio of the manipulation amount actually input to the analog sticks to the manipulation amount recognized by the information processing device 10.

The dead zone information is information containing a setting value associated with a dead zone of the analog sticks of the controller 6. The dead zone of the analog sticks is a range where a manipulation input to each of the analog sticks is not receivable, i.e., a range where a manipulation input to each of the analog sticks is ignored. The setting value of the dead zone may be a value range of a tilt amount corresponding to the dead zone.

A problem recognized by the present inventor is the current demand for development of such a mechanism which enables easy switching to profile information that is desired by the user and that is among a plurality of pieces of profile information stored in the controller, with the prospect that the number of pieces of profile information storable in the controller will increase in the future.

The first feature of the information processing system 1 based on the above problem recognized by the present inventor aims at assisting easy switching to profile information that is desired by the user and that is among a plurality of pieces of profile information stored in the controller 6. Specifically, according to the first feature, the controller 6 of the information processing system 1 stores profile information associated with manipulations of the controller 6. In response to input of a manipulation of a second button together with a manipulation of a first button, the controller 6 switches profile information to be applied to manipulations of the controller 6.

The first button is considered as a button for causing the second button to exert a function associated with profile information and different from a normal function. The first button includes a function button 88 described later. The second button includes manipulation buttons 76, direction buttons 71, and an OPTIONS button 82 described later. The controller 6 according to the embodiment is enabled to execute various manipulations according to combinations of the function button 88 and other buttons.

A different problem recognized by the present inventor is a demand for development of such a mechanism which enables the user to easily check information associated with profile information stored in the controller (i.e., profile information selectable by the user) with the prospect that the number of pieces of profile information storable in the controller will increase in the future.

The second feature of the information processing system 1 based on the above problem recognized by the present inventor aims at assisting the user to easily check information associated with profile information stored in the controller 6. Specifically, according to the second feature, the information processing device 10 of the information processing system 1 acquires profile information stored in the controller 6. In response to detection of input of a predetermined manipulation with use of the button of the controller 6 during execution of an application, the information processing device 10 causes the display device 4 to display information associated with the profile information acquired from the controller 6.

A further problem recognized by the present invention is a conventional situation where switching of profile information to be applied to manipulations of the controller is recognized by the user according to a lighting mode of a lamp of an indicator or a position of a physical selector switch. Accordingly, feedback associated with switching of the profile information is not necessarily provided in a form convenient for the user in some cases.

The third feature of the information processing system 1 based on the above problem aims at providing feedback, in a form convenient for the user, associated with switching of profile information to be applied to manipulations of the controller 6. Specifically, according to the third feature, the controller 6 of the information processing system 1 stores a plurality of pieces of profile information associated with manipulations of the controller 6 and selectable by the user. A notification unit of the information processing system 1 has a plurality of types of feedback systems for presenting to the user the fact that the profile information to be applied to manipulations of the controller 6 has been switched, in response to switching of the profile information.

A button configuration of the controller 6 illustrated in FIG. 1 will be described. FIG. 2 illustrates an upper surface of the controller 6. The user holds a left holding portion 78b by the left hand and holds a right holding portion 78a by the right hand to manipulate the controller 6. The direction buttons 71, a right analog stick 77a, a left analog stick 77b, and the manipulation buttons 76 each constituting an input unit are provided on an upper surface of a housing of the controller 6. The direction buttons 71 are configured to receive input of eight directions, i.e., upward, downward, leftward, rightward, and diagonal directions, and include an up-button 71a, a left-button 71b, a down-button 71c, and a right-button 71d according to the present embodiment. Different colors and different figures are given to the four types of the manipulation buttons 76 for distinction between these types. The manipulation buttons 76 include the circle button 72, the cross button 73, a square button 74, and a triangle button 75.

Each of the right analog stick 77a and the left analog stick 77b is also called a control stick, a thumbstick, or a joystick, and is tilted to input a direction and a tilt amount. The tilt amount is also considered as a tilt angle of the right analog stick 77a or the left analog stick 77b. Each of the right analog stick 77a and the left analog stick 77b also functions as a push button which sinks downward by a press of the user and returns to an original position by release of the hand of the user. Each of the right analog stick 77a and the left analog stick 77b will hereinafter also collectively be referred to as an "analog stick 77." The manipulation buttons 76, the direction buttons 71, and the analog sticks 77 are used to manipulate an application (a game according to the embodiment) executed by the information processing device 10.

A touch pad 79 is provided in a flat region between the direction buttons 71 and the manipulation buttons 76 on the upper surface of the housing. In addition to a function of detecting a touch by the finger of the user, the touch pad 79 also has a function as a push button which sinks downward by a press of the user and returns to an original position by release of the hand of the user. Moreover, a speaker 84 is further provided on the upper surface of the housing.

A home button 80 is provided between the right analog stick 77a and the left analog stick 77b. The home button 80 is used to turn on power sources of the controller 6 and the information processing device 10 and simultaneously activate a communication function for wirelessly connecting with the information processing device 10. After connection between the controller 6 and the information processing device 10 is established, the home button 80 is also used to cause the information processing device 10 to display a menu screen or a home screen. Each of the menu screen or the home screen is a screen through which the user selects a function or an application to be executed by the information processing device 10.

A SHARE button 81 is provided on the left side of the touch pad 79. The OPTIONS button 82 is provided on the right side of the touch pad 79. Each of the SHARE button 81 and the OPTIONS button 82 is used to input an instruction given from the user to an operating system (OS) or system software of the information processing device 10. In other words, each of the SHARE button 81 and the OPTIONS button 82 is a button used to call (manipulate) a function of the OS or the system software of the information processing device 10. Each of the SHARE button 81 and the OPTIONS button 82 may be constituted by a push-type button.

A light emission unit 86 is provided on a lower edge portion of the touch pad 79. The light emission unit 86 includes a plurality of lamps (five lamps in the example of FIG. 2), and displays information associated with a state of the controller 6 in the form of a lighting mode of the plurality of lamps (i.e., a combination of a lighting state and a light-extinction state). In a normal state, the light emission unit 86 is set to a lighting mode indicating identification information associated with the controller 6 (information for distinction from other controllers). According to the embodiment, in a case where profile information to be applied to manipulations of the controller 6 is switched, the light emission unit 86 is set to a lighting mode for a short period of time, indicating that the profile information associated with the controller 6 has been switched.

Each of a right function button 88a and a left function button 88b (hereinafter also collectively referred to as a "function button 88") is a button for changing or expanding functions of other buttons. According to the embodiment, when input of a manipulation of the manipulation button 76 is made simultaneously with input of a manipulation of the function button 88, profile information to be applied to manipulations of the controller 6 is switched to profile information corresponding to the type of the manipulation button 76 operated simultaneously with the function button 88. The right function button 88a and the left function button 88b may have completely the same function. In this case, the same function is provided by operation of either the left or right button.

As illustrated in FIG. 2, the controller 6 includes various types of input units (e.g., various buttons and sticks). The user inputs manipulations to the input units of the controller 6 while viewing a menu screen or a game screen displayed on the display device 4.

FIG. 3 illustrates a hardware configuration associated with the controller 6 according to the present embodiment. The controller 6 includes a vibrator 90, a storage unit 92, a communication control unit 94, and a processor 96, in addition to the hardware illustrated in FIG. 2. The processor 96 executes various types of data processing, and controls operations of various types of hardware. The processor 96 may include a central processing unit (CPU), a memory, and a system on a chip (SoC).

The vibrator 90 vibrates according to a control signal received from the processor 96, to provide a tactile stimulation to the user. The storage unit 92 stores data referred to or updated by the processor 96. The communication control unit 94 controls communication with an external device. According to the embodiment, the communication control unit 94 wirelessly communicates with the information processing device 10. Alternatively, the communication control unit 94 in a modification may communicate with the information processing device 10 by wire.

FIG. 4 illustrates a hardware configuration of the information processing device 10. The information processing device 10 includes a main power source button 20, a power ON light emitting diode (LED) 21, a standby LED 22, a system controller 24, a clock 26, a device controller 30, a media drive 32, a universal serial bus (USB) module 34, a flash memory 36, a wireless communication module 38, a wired communication module 40, a subsystem 50, and a main system 60.

The main system 60 includes a main CPU, a memory and a memory controller constituting a main storage device, a graphics processing unit (GPU), and others. The GPU is chiefly employed for arithmetic processing of a game program. These functions may constitute an SoC formed on one chip. The main CPU has a function of starting an OS, and executing an application installed in a storage unit (e.g., the flash memory 36 or an unillustrated auxiliary storage device) in an environment provided by the OS. Moreover, the main system 60 has a function of controlling display contents provided by the display device 4.

The subsystem 50 includes a sub-CPU, a memory and a memory controller constituting a main storage device, and others, but not a GPU. The number of circuit gates of the sub-CPU is smaller than the number of circuit gates of the main CPU, and operation power consumption of the sub-CPU is lower than operation power consumption of the main CPU. The sub-CPU operates during a standby-state of the main CPU, and has limited processing functions so as to reduce power consumption. Note that the sub-CPU and the memory may be formed on a separate chip.

The main power source button 20 as an input unit to which a manipulation is input from the user is provided on a front surface of a housing of the information processing device 10 and operated to turn on or off power supply to the main system 60 of the information processing device 10. It is assumed hereinafter that an on-state of the main power source refers to an active state of the main system 60 and that an off-state of the main power source refers to a standby-state of the main system 60. The power source ON LED 21 is turned on when the main power source button 20 is turned on. The standby LED 22 is turned on when the main power source button 20 is turned off.

The system controller 24 detects a press of the main power source button 20 by the user. When the main power source button 20 is pressed in the off-state of the main power source, the system controller 24 acquires this press manipulation as an "on-instruction." In contrast, when the main power source button 20 is pressed in the on-state of the main power source, the system controller 24 acquires this press manipulation as an "off-instruction." The system controller 24 may acquire a power source on/off-instruction similar to the above from a manipulation input from the controller 6.

The main CPU has a function of executing a game program installed in a predetermined storage unit or a read only memory (ROM) medium 44, while the sub-CPU does not have this function. However, the sub-CPU has a function of accessing a storage unit and a function of transmitting and receiving data to and from an external device. The sub-CPU only has the limited processing function as described above, and hence is operable by lower power consumption than the main CPU. These functions of the sub-CPU are executed when the main CPU is in the standby-state.

The clock 26 constituting a real-time clock generates current date and time information, and supplies the date and time information to the system controller 24, the subsystem 50, and the main system 60.

The device controller 30 constitutes a large-scale integrated circuit (LSI) for executing information delivery between devices, such as a south bridge. As illustrated in the figure, such devices as the system controller 24, the media drive 32, the USB module 34, the flash memory 36, the wireless communication module 38, the wired communication module 40, the subsystem 50, and the main system 60 are connected to the device controller 30. The device controller 30 absorbs a difference in electric characteristic between devices and a difference in data transmission speed to control data transfer timing.

The media drive 32 is a drive device which drives the ROM medium 44 attached as a medium where application software, such as a game, and license information are recorded, and reads programs, data, and the like from the ROM medium 44. The ROM medium 44 is a read-only recording medium, such as an optical disk, a magneto-optical disk, and a Blu-ray disk.

The USB module 34 is a module connected to an external device via a USB cable. The flash memory 36 is an auxiliary storage device constituting an internal storage. The wireless communication module 38 is a communication protocol such as Bluetooth (trademark or registered trademark) protocol and Institute of Electrical and Electronics Engineering (IEEE) 802.11 protocol, and wirelessly communicates with the controller 6 and the headphone 8, for example. The wired communication module 40 communicates with an external device by wire, and connects with the Internet, a server, or the like via unillustrated accel points, for example.

FIG. 5 is a block diagram illustrating function blocks of the controller 6. The respective blocks illustrated in the block diagram of the present description are implemented by such elements as a processor, a CPU, and a memory of a computer as typical examples, electronic circuits, or mechanical devices in terms of hardware, or implemented by a computer program or the like loaded to a memory in terms of software. This figure particularly illustrates function blocks implemented by cooperations of these. Accordingly, it is understood by those skilled in the art that these function blocks can be implemented in various forms according to combinations of hardware and software.

The controller 6 includes a profile storage unit 100 and a processing unit 102. The profile storage unit 100 is implemented by the storage unit 92 illustrated in FIG. 3. The processing unit 102 executes various types of information processing. The processing unit 102 is implemented by the processor 96 illustrated in FIG. 3.

The profile storage unit 100 stores profile information associated with the controller 6. The profile storage unit 100 stores a plurality of pieces of profile information in association with the corresponding types of the manipulation buttons 76 different from each other.

According to the embodiment, the profile storage unit 100 stores four pieces of profile information at a maximum in association with the four manipulation buttons 76 (the circle button 72, the cross button 73, the square button 74, and the triangle button 75).

The processing unit 102 includes a manipulation detection unit 104, a manipulation information generation unit 106, a manipulation information transmission unit 108, a change unit 110, a notification unit 112, and a setting update unit 114. A computer program (e.g., firmware) implementing at least some of the plurality of functions described above may be stored in the storage unit 92 of the controller 6. The processor 96 of the controller 6 may retrieve this computer program into a main memory and execute the compute program to exert at least some of the plurality of functions described above.

The manipulation detection unit 104 detects manipulations input to the controller 6 from the user. For example, the manipulations input from the user include a manipulation for pressing the button or tilting the analog stick 77.

The manipulation information generation unit 106 generates user manipulation information transmitted from the controller 6 to the information processing device 10, in reference to profile information selected by the user and applied to a manipulation of the controller 6 and a manipulation input to the controller 6 from the user and detected by the manipulation detection unit 104. For example, in a case where a manipulation of a first tilt amount is input to the analog stick 77, the manipulation information generation unit 106 may determine a second tilt amount of the analog stick 77 which is to be input to the information processing device 10, in reference to sensitivity and a size of a dead zone indicated by the profile information applied to the manipulation of the controller 6. Thereafter, the manipulation information generation unit 106 may generate manipulation information indicating the second tilt amount of the analog stick 77.

The manipulation information transmission unit 108 transmits to the information processing device 10 manipulation information that is generated by the manipulation information generation unit 106 and that indicates a manipulation performed by the user.

The change unit 110 switches profile information to be applied to manipulations of the controller 6, in response to input of a manipulation of the manipulation button 76 as the second button together with a manipulation of the function button 88 as the first button. Specifically, in response to input of a manipulation of the specific manipulation button 76 together with a manipulation of the function button 88, the change unit 110 switches profile information to be applied to manipulations of the controller 6 to profile information that is associated with the specific function button 88 corresponding to the manipulation target and that is among a plurality of pieces of profile information stored in the profile storage unit 100.

The notification unit 112 provides to the user at least one type of feedback among a plurality of types of feedback in a case where profile information to be applied to manipulations of the controller 6 is switched. The notification unit 112 has a plurality of types of feedback systems for presenting to the user the fact that profile information to be applied to manipulations of the controller 6 has been switched, in response to switching of this profile information.

The setting update unit 114 updates profile information stored in the profile storage unit 100, in reference to update data of profile information transmitted from the information processing device 10.

FIG. 6 is a block diagram illustrating function blocks of the information processing device 10. The information processing device 10 includes a storage unit 200 and a processing unit 210. The processing unit 201 executes various types of information processing. The processing unit 210 is implemented by the processor of the information processing device 10. For example, the processing unit 210 may be implemented by the main system 60 illustrated in FIG. 4. The storage unit 200 stores data referred to or updated by the processing unit 210. The storage unit 200 can include the flash memory 36 and the ROM medium 44 illustrated in FIG. 4.

The storage unit 200 includes an application storage unit 202 and a profile storage unit 204. The application storage unit 202 stores data concerning an application (a game program according to the embodiment) executable by the information processing device 10.

The profile storage unit 204 stores profile information associated with the controller 6. At least some of a plurality of pieces of profile information (four pieces of profile information at a maximum) stored in the profile storage unit 204 correspond to profile information stored in the controller 6.

The processing unit 210 includes a profile information acquisition unit 212, a manipulation information reception unit 214, an application execution unit 216, a setting screen formation unit 218, a display control unit 220, an audio processing unit 221, a notification unit 222, and an update instruction unit 224. A computer program implementing at least some of a plurality of functions described above may be stored in the storage unit 200 of the information processing device 10. The processor of the information processing device 10 (e.g., the main system 60) may retrieve this computer program into a main memory and execute the compute program to exert at least some of the plurality of functions described above.

From the controller 6 connected to the information processing device 10, the profile information acquisition unit 212 acquires profile information stored in the controller 6, and stores the acquired profile information in the profile storage unit 204. For example, the profile information acquisition unit 212 acquires a plurality of pieces of profile information stored in the controller 6 and selectable by the user.

The manipulation information reception unit 214 receives manipulation information that is transmitted from the controller 6 connected to the information processing device 10 and that indicates a manipulation performed by the user for the controller 6.

The application execution unit 216 executes an application program (a game program according to the embodiment) stored in the application storage unit 202. The application execution unit 216 advances a game in accordance with manipulation information indicating manipulations performed by the user for the controller 6, and sequentially forms an image indicating a result of progression of the game (hereinafter also referred to as a "game screen").

The setting screen formation unit 218 detects input of a predetermined manipulation using the function button 88 as the first button, in reference to the manipulation information associated with manipulations performed by the user for the controller 6 during execution of the game (e.g., during display of the game screen). In a case where input of the predetermined manipulation using the function button 88 is detected, the setting screen formation unit 218 generates information associated with profile information acquired by the profile information acquisition unit 212 and stored in the profile storage unit 204. As will be described later, the information associated with the profile information includes a function menu window and a profile information setting screen.

The display control unit 220 outputs to the display device 4 data associated with the game screen and generated by the application execution unit 216, to cause the display device 4 to display the game screen. Moreover, the display control unit 220 outputs to the display device 4 information that is related to profile information associated with the controller 6 and that is generated by the setting screen formation unit 218, to cause the display device 4 to display this information.

The audio processing unit 221 controls sound output from a speaker or the like connected to the information processing device 10. For example, the audio processing unit 221 transmits to the headphone 8 game audio signals generated by the application execution unit 216, to output sounds of the game from the headphone 8. Alternatively, the audio processing unit 221 transmits sounds of the game to the controller 6 to output the sounds from the speaker 84 built in the controller 6. Moreover, the audio processing unit 221 transmits to the headphone 8 chat sound signals (e.g., utterances from other users) input from an external device to the information processing device 10, to output the chat sounds from the headphone 8. The audio processing unit 221 may output a mixture of the game sounds and the chat sounds from the headphone 8, or output this mixture from the speaker 84 of the controller 6.

The update instruction unit 224 transmits an instruction for updating profile information to the controller 6 according to a manipulation input to a profile information setting screen from the user. The update instruction unit 224 causes the controller 6 to store profile information edited on the profile information setting screen, i.e., reflects editing details input to the profile information setting screen in the profile information stored in the controller 6.

The notification unit 222 provides predetermined feedback to the user in a case where profile information to be applied to manipulations of the controller 6 is switched. The notification unit 112 of the controller 6 and the notification unit 222 of the information processing device 10 constitute the notification unit of the information processing system 1. The notification unit of the information processing system 1 has a plurality of types of feedback systems for presenting to the user the fact that the profile information to be applied to manipulations of the controller 6 has been switched, in response to switching of this profile information.

A plurality of types of feedback systems constitute means or mechanisms for providing information to be perceived by different types of senses of the user, and include hardware and software. Information provided by the feedback system to the user will also be referred to as "feedback." The feedback includes various types of physical phenomena using hardware, and includes physical stimulations for the user.

The plurality of types of feedback systems include a feedback system for providing visual information as feedback and a feedback system for providing tactile information as feedback. The visual information can also be expressed as a visual stimulation, and corresponds to information (e.g., images) perceived by visual perception of a human. The hardware providing visual information as feedback includes either one of or both the light emission unit 86 of the controller 6 and the display device 4 different from the controller 6. The tactile information can also be expressed as a tactile stimulation, and corresponds to information (e.g., vibration) perceived by tactile perception of a human. The hardware providing tactile information as feedback includes the vibrator 90 of the controller 6.

In a case where profile information to be applied to manipulations of the controller 6 is switched, the notification unit of the information processing system 1 provides to the user one or more types of feedback selected by the user from the plurality of types of feedback. Specifically, in a case where profile information to be applied to manipulations of the controller 6 is switched, the notification unit of the information processing system 1 actuates one or more types of feedback systems corresponding to one or more types of feedback selected by the user from the plurality of types of feedback systems.

Operation of the information processing system 1 having the foregoing configuration will be described. When the controller 6 is connected to the information processing device 10, the profile information acquisition unit 212 of the information processing device 10 acquires profile information stored in the profile storage unit 100 of the controller 6, and stores the acquired information in the profile storage unit 204. It is further assumed that, in the following description, the application execution unit 216 of the information processing device 10 is executing a game program and that the display control unit 220 is displaying a game screen on the display device 4.

Operation associated with profile switching will first be described. FIG. 7 illustrates an example of profile switching using the function button 88.

In case 1, the user holds the controller 6, and presses the triangle button 75 as the second button while pressing the function button 88 as the first button. In this case, the change unit 110 of the controller 6 switches current profile information to profile information associated with the triangle button 75 (e.g., default profile) at the time of detection of a press of the triangle button 75 during detection of a press of the function button 88. While not illustrated, the change unit 110 of the controller 6 switches current profile information to profile information associated with the cross button 73 (e.g., fighting profile 1) in response to a press of the cross button 73 by the user together with a press of the function button 88.

In case 2, the user inputs a holding-down manipulation of the function button 88. According to the embodiment, the holding-down manipulation is a press manipulation continuing for 400 milliseconds or longer. The setting screen formation unit 218 of the information processing device 10 detects the holding-down manipulation of the function button 88, and forms a function menu window (described later). The display control unit 220 displays the function menu window on the game screen in an overlapping manner. When the user continuously presses the triangle button 75 while pressing the function button 88 even after display of the function menu window, the change unit 110 of the controller 6 detects the press of the triangle button 75 during detection of the press of the function button 88. Accordingly, the change unit 110 switches current profile information to profile information associated with the triangle button 75 (e.g., default profile). When the user stops pressing the function button 88, the display control unit 220 of the information processing device 10 ends display of the function menu window on the game screen.

In case 3, the user presses the triangle button 75 before the press time of the function button 88 reaches 400 milliseconds (i.e., before display of the function menu window 302), and subsequently the press time of the function button 88 reaches 400 milliseconds. In this case, the change unit 110 of the controller 6 detects the press of the triangle button 75 during detection of the press of the function button 88. Accordingly, the change unit 110 switches current profile information to profile information associated with the triangle button 75 (e.g., default profile). Meanwhile, the display control unit 220 of the information processing device 10 detects a manipulation of a different button (the triangle button 75 in this case) before the press time of the function button 88 reaches 400 milliseconds. Accordingly, the display control unit 220 prevents display of the function menu window 302.

In a case where a switching manipulation of profile information is performed, the change unit 110 of the controller 6 notifies the manipulation information generation unit 106 of this fact. In a case where the switching manipulation is for switching profile information currently selected, the manipulation information generation unit 106 generates user manipulation information in reference to the profile information selected by this switching manipulation. For example, the manipulation information generation unit 106 generates manipulation information associated with the analog stick 77 in reference to a tilt amount of the analog stick 77 given by the user and sensitivity and a setting value of a dead zone indicated by the profile information currently selected. The application execution unit 216 of the information processing device 10 executes an application (game program), in reference to manipulation information transmitted from the controller 6 and reflecting the profile information currently selected.

FIG. 8 illustrates an example of the function menu window. As already described above, the function menu window 302 is displayed while being superimposed on a screen (the game screen 300 in the figure) indicating a result of execution of an application. The function menu window 302 includes a list of a plurality of pieces of profile information selectable by the user on the controller 6 as information corresponding to profile information associated with the controller 6. The list of the profile information includes information indicating the respective buttons of the manipulation buttons 76 associated with the corresponding plurality of pieces of profile information. The list of the profile information may include an ID and a name of each profile and corresponding button information. The function menu window 302 illustrated in FIG. 8 indicates that the default profile is associated with the triangle button 75 and that the fighting profile 1 is associated with the cross button 73.

A selected profile indicator 304 is an object indicating profile information currently selected on the controller 6. In a case where profile information to be applied to manipulations of the controller 6 is switched, the notification unit 112 of the controller 6 notifies the information processing device 10 of profile information applied after switching (i.e., profile information currently selected). The setting screen formation unit 218 of the information processing device 10 adds the selected profile indicator 304 to the profile information currently selected among the respective pieces of profile information set on the function menu window 302.

Moreover, the function menu window 302 presents a customizing function for the profile information in association with an image indicating the OPTIONS button 82. The customizing function for the profile information using the function button 88 and the OPTIONS button 82 will be described later in conjunction with FIG. 12.

Further, the function menu window 302 includes information indicating allocations of shortcuts for audio manipulations. For example, the function menu window 302 illustrated in FIG. 8 indicates that the up-button 71a and the down-button 71c of the controller 6 function as shortcut keys for adjusting the volume of the headphone 8. In addition, the function menu window 302 illustrated in FIG. 8 indicates that the left-button 71b and the right-button 71d of the controller 6 function as shortcut keys for adjusting the balance between the game volume and the chat volume.

The change unit 110 of the controller 6 further executes a change process associated with sound output, in response to input of a manipulation of the direction button 71 as the second button together with a manipulation of the function button 88 as the first button. According to the embodiment, the change unit 110 of the controller 6 transmits a change instruction associated with sound output to the information processing device 10 in response to input the manipulation of the direction button 71 together with the manipulation of the function button 88. The audio processing unit 221 of the information processing device 10 changes an output mode of sounds from a sound output device (the headphone 8 or the speaker 84 of the controller 6 according to the embodiment) according to the foregoing instruction issued from the controller 6.

Specifically, in response to input of a manipulation of the up-button 71a or the down-button 71c together with the manipulation of the function button 88, the change unit 110 of the controller 6 transmits to the information processing device 10 a signal indicating an instruction for changing the volume of the headphone 8 or the speaker 84 of the controller 6. For example, the simultaneous manipulations of the function button 88 and the up-button 71a may be defined as an instruction for increasing the volume, while the simultaneous manipulations of the function button 88 and the down-button 71c may be defined as an instruction for decreasing the volume. The audio processing unit 221 of the information processing device 10 changes the volume of sounds output from the headphone 8 or the speaker 84 of the controller 6 (e.g., game sounds or chat sounds) in accordance with the foregoing signal received from the controller 6.

Moreover, in response to input of a manipulation of the left-button 71b or the right-button 71d together with the manipulation of the function button 88, the change unit 110 of the controller 6 transmits to the information processing device 10 a signal indicating an instruction for adjusting the balance between the game volume and the chat volume. For example, the simultaneous manipulations of the function button 88 and the left-button 71b may be defined as an instruction for decreasing the ratio of the chat volume, while the simultaneous manipulations of the function button 88 and the right-button 71d may be defined as an instruction for increasing the ratio of the chat volume. The audio processing unit 221 of the information processing device 10 changes the balance between the game volume and the chat volume output from the headphone 8 or the speaker 84 of the controller 6, according to the foregoing signal received from the controller 6.

FIG. 9 illustrates an example of a sound output change using the function button 88. In case 1, the user holds the controller 6, and presses the up-button 71a while pressing the function button 88. In this case, the change unit 110 of the controller 6 increases the volume of the sounds output from the headphone 8 by one unit in cooperation with the audio processing unit 221 of the information processing device 10.

In case 2, the user inputs a holding-down manipulation of the function button 88, and also starts a press of the up-button 71a before the press time of the function button 88 reaches 400 milliseconds. In this case, the change unit 110 of the controller 6 increases stepwise the volume of the sounds output from the headphone 8 or the speaker 84 of the controller 6, during a period in which the press of the up-button 71a continues. Meanwhile, the display control unit 220 of the information processing device 10 detects the manipulation of the different button (up-button 71a in this case) before the press time of the function button 88 reaches 400 milliseconds. Accordingly, the display control unit 220 prevents display of the function menu window 302.

Further, in case 2, the user continues the press of the up-button 71a even after the manipulation of the function button 88 is ended. The change unit 110 of the controller 6 does not increase the volume of the sounds output from the headphone 8, even when the press of the up-button 71a is detected after the manipulation of the function button 88 is ended. Note that the application execution unit 216 of the information processing device 10 may recognize the press of the up-button 71a after the end of the manipulation of the function button 88 as a manipulation of the game, and reflect this press in the progression of the game.

In case 3, the user inputs a holding-down manipulation of the function button 88, and also presses the up-button 71a a plurality of times after the press time of the function button 88 reaches 400 milliseconds. The setting screen formation unit 218 of the information processing device 10 detects the holding-down manipulation of the function button 88, and forms a function menu window. The display control unit 220 displays the function menu window on the game screen in an overlapping manner. After the holding-down manipulation of the function button 88 ends, the display control unit 220 ends display of the function menu window. The change unit 110 of the controller 6 increases stepwise the volume of the sounds output from the headphone 8 during a period in which the press of the function button 88 continues, according to the number of times of the press of the up-button 71a.

FIG. 10 illustrates an example which executes both profile switching and a sound output change by using the function button 88. The user presses the up-button 71a before pressing the function button 88, and starts holding down the function button 88 while continuously pressing the up-button 71a. Since the up-button 71a has been pressed before the function button 88 is pressed, a particular operation (e.g., volume increasing process) is not executed at the timing of the press of the function button 88. The application execution unit 216 of the information processing device 10 recognizes the press of the up-button 71a before the manipulation of the function button 88 as a manipulation of the game, and reflects this press in the progression of the game.

The user sequentially presses the triangle button 75, the down-button 71c, and the cross button 73 during the holding-down of the function button 88. When detecting the press of the triangle button 75, the change unit 110 of the controller 6 switches current profile information to profile information associated with the triangle button 75 (e.g., default profile). In a period of both continuation of the press of the function button 88 and continuation of the press of the down-button 71c, the change unit 110 of the controller 6 decreases stepwise the volume of the sounds output from the headphone 8. When detecting the press of the cross button 73 together with the press of the function button 88, the change unit 110 of the controller 6 switches current profile information to profile information associated with the cross button 73 (e.g., fighting profile 1).

As described above, the change unit 110 of the controller 6 executes a change process associated with a setting item of a type determined by one press (i.e., one manipulation) in response to input of a manipulation of the manipulation button 76 together with a manipulation of the function button 88. The setting item of the type determined by one press is profile information associated with the controller 6 according to the embodiment. However, in a modification, this setting item may be an application to be executed, or a manipulation target included in an application (e.g., a game character).

Moreover, the change unit 110 of the controller 6 executes a change process corresponding to a setting item whose value successively changes, in response to input of a manipulation of the direction button 71 together with a manipulation of the function button 88. The setting item whose value successively changes corresponds to the volume and the sound balance according to the embodiment. However, in a modification, this setting item may be luminance, brightness, chroma, or the like of images of an application, or a moving speed or the like of a manipulation target included in an application (e.g., a game character).

According to the information processing system 1 of the embodiment, the user is allowed to swiftly switch profile information to be applied to manipulations of the controller 6. Accordingly, usability of the controller 6 improves. For example, if the user recognizes the manipulation button 76 associated with desired profile information corresponding to profile information to be used after switching, the user can switch the current profile information to the desired profile information by one manipulation using the function button 88 and the manipulation button 76 regardless of which profile information is currently being selected. In other words, the user is allowed to switch the profile information to be applied to manipulations of the controller 6 without looking away from the screen during execution of the game. Moreover, according to the information processing system 1 of the embodiment, the necessity of providing hardware dedicated for profile information switching can be eliminated by use of a command method for achieving switching of the profile information.

Subsequently described will be operation associated with notification given to the user regarding profile information switching. In a case where the change unit 110 of the controller 6 switches profile information to be applied to manipulations, the notification unit 112 of the controller 6 can control operation of one of or both the light emission unit 86 and the vibrator 90 according to feedback settings determined beforehand. Specifically, the notification unit 112 can provide to the user feedback using one of or both visual information and tactile information according to one switching of the profile information.

For example, in a case where an indicator of the controller is selected as the feedback system, the notification unit 112 may transmit to the light emission unit 86 a signal indicating an instruction for light emission for a predetermined period of time in a mode representing switching of the profile information. In this case, feedback using visual information indicating profile switching is provided to the user by light emission from the light emission unit 86 in the mode described above. Moreover, in a case where vibration of the controller is selected as the feedback system, the notification unit 112 may transmit to the vibrator 90 a signal indicating an instruction for vibration for a predetermined period of time. In this case, feedback using tactile information indicating profile switching is provided to the user by vibration of the vibrator 90.

In a case where the change unit 110 of the controller 6 switches profile information to be applied to manipulations, the notification unit 112 of the controller 6 further transmits data indicating switching of the profile information to the information processing device 10 to notify the information processing device 10 of the switching of the profile information. In a case where notification regarding the switching of the profile is given from the controller 6 with designation of screen notification as the feedback system in the feedback settings determined beforehand, the notification unit 222 of the information processing device 10 causes the display device 4 to display information (e.g., an image or a message) indicating that the profile information has been switched. The information associated with the switching of the profile information may be displayed on an image associated with the application currently executed and displayed on the display device 4 in an overlapped manner. In this case, feedback using visual information indicating switching of the profile is provided to the user. Specifically, the visual information as feedback can be displayed on both the display unit of the controller 6 (the light emission unit 86 according to the embodiment) and the display device 4 different from the controller 6 according to the settings given by the user.

The setting screen formation unit 218 of the information processing device 10 generates data concerning a screen for setting a mode of feedback of profile switching (hereinafter also referred to as a "feedback setting screen") according to a manipulation performed by the user. The display control unit 220 causes the display device 4 to display the feedback setting screen. The feedback setting screen may be one of screens associated with system settings of the information processing device 10.

FIG. 11 illustrates an example of the feedback setting screen. A feedback setting screen 330 includes information indicating a plurality of types of feedback systems selectable by the user. As already described, the plurality of types of feedback systems use different types of hardware, and specifically include (1) an indicator of the controller (a feedback system using the light emission unit 86 of the controller 6), (2) vibration of the controller (a feedback system using the vibrator 90 of the controller 6), and (3) screen notification (a feedback system using the display device 4).

Soft switches 332 are disposed in areas of the respective feedback systems on the feedback setting screen 330. The user sets the soft switch 332 corresponding to the desired feedback system to ON. According to the embodiment, any feedback mode is selectable on the feedback setting screen 330 from choices in a range from no-feedback (OFF is selected for all of the three feedback systems) to concurrent execution of three types of feedback (ON is selected for all of the three feedback systems).

The notification unit 222 of the information processing device 10 stores information indicating ON/OFF of feedback using the screen notification among the setting details on the feedback setting screen 330. In a case where feedback using the screen notification is set to ON, the notification unit 222 notifies the user of switching of the profile information via the screen of the display device 4. Moreover, the notification unit 222 transmits the setting details on the feedback setting screen 330 to the controller 6.

The notification unit 112 of the controller 6 stores information indicating ON/OFF of feedback given by the indicator of the controller 6 and information indicating ON/OFF of feedback given by vibration of the controller 6 among the setting details on the feedback setting screen 330. In a case where feedback using the indicator of the controller 6 is set to ON, the notification unit 112 notifies the user of switching of the profile information by using the light emission unit 86. In a case where feedback using the vibration of the controller 6 is set to ON, the notification unit 112 notifies the user of switching of the profile information by using the vibrator 90.

According to the information processing system 1 of the embodiment, in a case where profile information to be applied to manipulations of the controller 6 is switched, feedback can be provided in a form convenient for the user. In addition, according to the information processing system 1, the user can easily be notified of the fact that setting information has been switched.

Operation associated with profile setting and editing will next be described. FIG. 12 schematically illustrates a screen transition associated with profile setting. During execution of an application (during display of the game screen 300 according to the embodiment), the setting screen formation unit 218 of the information processing device 10 detects input of a manipulation of the OPTIONS button 82 as the second button together with a manipulation of the function button 88 as the first button, in reference to manipulation information associated with manipulations performed by the user for the controller 6. In a case where input of the manipulation of the OPTIONS button 82 is detected together with input of the manipulation of the function button 88, the setting screen formation unit 218 generates data concerning a setting screen of profile information (hereinafter also referred to as a "profile setting screen"). The display control unit 220 of the information processing device 10 causes the display device 4 to display the profile setting screen instead of the game screen 300.

The profile setting screen includes a profile top screen 310 and a profile editing screen 320. In a case where the OPTIONS button 82 is manipulated together with the function button 88 during display of the game screen 300 (possibly including the function menu window 302), a transition from the game screen 300 to the profile top screen 310 is made in normal cases.

The profile top screen 310 is a screen for selecting profile information to be stored in the controller 6 and profile information to be erased (deleted) from the controller 6. The profile top screen 310 includes a profile creation button 312 and profile information that is stored in the controller 6. The profile creation button 312 is a soft button for creating a new profile. A transition to the profile editing screen 320 described below is made by a press of the profile creation button 312.

The profile information to be set on the profile top screen 310 may be any profile information stored in the profile information acquisition unit 212 of the information processing device 10. Each profile information on the profile top screen 310 includes an ID and a name of the corresponding profile and corresponding button information. An image indicating the type of the manipulation button 76 associated with the corresponding profile information is added to each profile information. Moreover, a recording button 314, a deletion button 316, and an editing button 318 are set for each profile information. Any profile information described above may be profile information previously set by the user for the information processing device 10, profile information downloaded and acquired by different users via a network and set, or the like.

The recording button 314 is a soft button for recording corresponding profile information in the controller 6. In a case where the recording button 314 corresponding to certain profile information is selected by the user, the update instruction unit 224 of the information processing device 10 transmits to the controller 6 a signal indicating an instruction for storing this profile information. The setting update unit 114 of the controller 6 stores the profile information designated by the foregoing signal in the profile storage unit 100.

The deletion button 316 is a soft button for deleting corresponding profile information from the controller 6. In a case where the deletion button 316 corresponding to certain profile information is selected by the user, the update instruction unit 224 of the information processing device 10 transmits to the controller 6 a signal indicating an instruction for deleting this profile information. The setting update unit 114 of the controller 6 erases the profile information designated by the foregoing signal from the profile storage unit 100.

The editing button 318 is a soft button for editing corresponding profile information. In a case where the editing button 318 corresponding to certain profile information is selected by the user, the setting screen formation unit 218 of the information processing device 10 generates data concerning the profile editing screen 320 for which current setting values determined by the corresponding profile information are set. The display control unit 220 causes the display device 4 to display the profile editing screen 320.

The profile editing screen 320 is a screen provided to allow the user to edit details of a new profile or an existing profile (e.g., profile information stored in the controller 6). The profile editing screen 320 includes a screen element for editing function allocations to buttons, a screen element for adjusting sensitivity of the analog sticks 77, and a screen element for adjusting a dead zone of the analog sticks 77.

According to the embodiment, when a specific profile is edited on the profile editing screen 320, the update instruction unit 224 of the information processing device 10 reflects the editing details in this specific profile information stored in the profile storage unit 204 on each occasion, and transmits the editing details to the controller 6 on each occasion. The setting update unit 114 of the controller 6 reflects the editing details on the profile editing screen 320 in the specific profile information stored in the profile storage unit 100. In a modification, the editing details on the profile editing screen 320 may be reflected in the profile information stored in each of the information processing device 10 and the controller 6 at the timing of a transition from the profile editing screen 320 to a different screen.

When input of a predetermined back manipulation by the user is detected during display of the profile editing screen 320, the display control unit 220 of the information processing device 10 ends display of the profile editing screen 320, and displays again the profile top screen 310. Moreover, when a manipulation of the OPTIONS button 82 by the user is detected together with a manipulation of the function button 88 during display of the profile top screen 310, the display control unit 220 ends display of the profile top screen 310, and displays again the game screen 300.

According to the embodiment, the profile editing screen 320 is displayed during execution of an application (e.g., during display of the game screen 300) in some cases. For example, a display transition from the game screen 300 to the profile editing screen 320 via the profile top screen 310 is made in some cases. When the manipulation of the OPTIONS button 82 by the user is detected together with the manipulation of the function button 88 during execution of the game in the background and display of the profile editing screen 320 as described above, the display control unit 220 of the information processing device 10 ends display of the profile editing screen 320, and again displays the game screen 300. In other words, a direct transition from the profile editing screen 320 to the game screen 300 is achieved.

Further, in response to detection of a manipulation of the OPTIONS button 82 by the user together with a manipulation of the function button 88 during display of the game screen 300 in a state where the most recently displayed profile setting screen is the profile editing screen 320, the display control unit 220 ends display of the game screen 300, and displays again the same profile editing screen 320. The same profile editing screen 320 is provided to edit the same profile information as the profile information included in the profile editing screen 320 which is the original screen before the transition to the game screen 300.

Specifically, on the condition that a direct transition from the profile editing screen 320 to the game screen 300 has been achieved, the display control unit 220 makes not a transition to the profile top screen 310, but a direct transition to the profile editing screen 320 which is the original screen before the transition to the game screen 300, according to manipulations of the function button 88 and the OPTIONS button 82 on the game screen 300. The display control unit 220 determines a screen transition based on manipulations of the first button and the predetermined second button (function button 88 and OPTIONS button 82) during display of the game screen 300 according to a history of screen transitions.

Moreover, a return button 322 is disposed on the profile editing screen 320. The return button 322 is a soft button for making a transition to an application screen currently executed. For displaying the profile editing screen 320 in a situation where the game is currently in progress in the background, the display control unit 220 sets the return button 322 to a figure indicating an active state.

In a case where the return button 322 indicating the active state on the profile editing screen 320 is selected by the user, the display control unit 220 ends display of the profile editing screen 320 and again displays the game screen 300 as in the time of input of the manipulations of the function button 88 and the OPTIONS button 82. In other words, a direct transition from the profile editing screen 320 to the game screen 300 is made. In a case of a direct transition from the profile editing screen 320 to the game screen 300 by use of the return button 322, a direct transition from the game screen 300 to the profile editing screen 320 is similarly achieved by input of the manipulations of the function button 88 and the OPTIONS button 82 on the game screen 300.

According to the information processing system 1 of the embodiment, information indicating profile information associated with the controller 6 is presented to the user according to a predetermined manipulation input from the user by use of the function button 88 of the controller 6 during execution of an application. In this manner, assistance for manipulations performed by the user concerning a profile of the controller 6 is achievable. For example, the information processing system 1 can present to the user a plurality of pieces of profile information selectable by the user, and assist selection of the profile information by the user, with the function menu window 302 being displayed when the function button 88 is held down.

Moreover, for setting the profile information, the user can easily (1) edit the profile information on the profile editing screen 320, (2) shift the screen back to the game screen 300 and check an editing result of the profile information (e.g., check actions or the like of game characters), and (3) shift the screen back to the same profile editing screen 320 as in (1) described above, and edit again the profile information according to the check result in (2) described above. In other words, the information processing device 10 can assist efficient optimization of profile information achieved by the user through a trial and error process.

The present invention has been described in reference to the embodiment. The embodiment described above is presented only by way of example. It is understood by those skilled in the art that various modifications can be made in combinations of respective constituent elements and respective treating processes, and that these modifications are also included in the scope of the present invention.

A modification will be described. A plurality of types of feedback systems included in the notification unit of the information processing system 1 (e.g., one of or both the notification unit 112 of the controller 6 and the notification unit 222 of the information processing device 10) may further include a feedback system which provides auditory information as feedback indicating switching of profile information associated with the controller 6. The auditory information can also be expressed as an auditory stimulation, and corresponds to information perceived by auditory perception of a human (e.g., audio signal).

For example, feedback using sounds may be selectable on the feedback setting screen 330 as the feedback system at the time of switching of profile information. In a case where profile information is switched in a state of selection of feedback using sounds as the feedback system, the notification unit 112 of the controller 6 may output predetermined sounds indicating switching of the profile information from a speaker (not illustrated) of the controller 6. Moreover, in a case where profile information is switched in a state of selection of feedback using sounds as the feedback system at the time of profile switching, the notification unit 222 of the information processing device 10 may output predetermined sounds indicating switching of the profile information from the headphone 8.

The notification unit of the information processing system 1 according to this modification may provide to the user feedback using at least two of visual information, tactile information, and auditory information at the time of one switching of profile information. Feedback means convenient for the user may vary for each user. However, in this modification, feedback of profile switching can easily be provided in a form convenient for each user by addition of the feedback using auditory information. In addition, the user can further easily recognize the fact that profile information has been switched.

A different modification will be described. The setting screen formation unit 218 of the information processing device 10 may form a setting screen (also referred to as a "menu setting screen") through which the user sets display details of the function menu window 302 according to a manipulation by the user. The display control unit 220 may cause the display device 4 to display the menu setting screen. Any pattern may be selectable from a plurality of patterns associated with display details on the menu setting screen. The setting screen formation unit 218 may form the function menu window 302 including details determined by the pattern selected on the menu setting screen.

A plurality of patterns of the display details selectable on the menu setting screen may include patterns of "all functions," "profile currently assigned," and "profile currently selected." The pattern of "all functions" is a pattern for displaying a list of all setting change functions using the function button 88 as illustrated in FIG. 8. The pattern "profile currently assigned" is a pattern for displaying a list of pieces of profile information currently assigned to the manipulation buttons 76 of the controller 6 (default profile, sniper rifle profile, fighting profile 1, and fighting profile 2 in the example of FIG. 8). The pattern "profile currently selected" is a pattern for displaying profile information currently selected via the controller 6 (fighting profile 1 in the example of FIG. 8).

Any combinations of the embodiment and the modifications described above are also useful as modes for carrying out the present invention. A new embodiment created by any of the combinations has advantageous effects of both the embodiment and the modification thus combined. Moreover, it is understood by those skilled in the art that functions to be implemented by the respective constituent features described in the claims are achieved by the single unit included in the respective constituent elements presented in the embodiment and the modifications, or by cooperative operations of these.

The technical idea described in the embodiment and the modifications described above can be expressed in modes described in the respective following sections.

### [Section 1-1]

A manipulation device including:
a first button;
a second button different from the first button;
a storage unit that stores setting information associated with a manipulation of the manipulation device; and
a change unit that switches setting information to be applied to the manipulation of the manipulation device, in response to input of a manipulation of the second button together with a manipulation of the first button.

This manipulation device enables a user to swiftly switch the setting information to be applied to the manipulation, thereby improving usability of the manipulation device.

### [Section 1-2]

The manipulation device according to section 1-1, further including:
a generation unit that generates, in reference to the setting information applied to the manipulation of the manipulation device,
manipulation information that is associated with a manipulation performed by a user and is transmitted from the manipulation device to an external information processing device.

This manipulation device can reflect the setting information selected by the user in the manipulation information given by the user and transmitted from the manipulation device to the information processing device.

### [Section 1-3]

The manipulation device according to section 1-1 or 1-2, in which the storage unit stores a plurality of pieces of the setting information in association with the corresponding second buttons different from one another, and
the change unit switches the setting information to be applied to the manipulation of the manipulation device to setting information associated with a specific second button, in response to input of a manipulation of the specific second button together with the manipulation of the first button.

This manipulation device can swiftly and easily switch the setting information to setting information that is desired by the user and that is among a plurality of pieces of the setting information.

### [Section 1-4]

The manipulation device according to any one of sections 1-1 to 1-3, in which the second button includes a button used for manipulating an application and a button used for manipulating a system.

This manipulation device enables the user to swiftly issue an instruction for executing various processes associated with switching of the setting information according to a combination of the first button and the button used for manipulating the application or a combination of the first button and the button used for manipulating the system.

### [Section 1-5]

The manipulation device according to section 1-4, in which
the storage unit stores the setting information in association with the button used for manipulating the application, and the change unit switches the setting information to be applied to the manipulation of the manipulation device to the setting information associated with the button used for manipulating the application, in response to input of a manipulation of the button used for manipulating the application together with the manipulation of the first button.

This manipulation device enables the user to swiftly switch the setting information by use of the button used for manipulating the application.

### [Section 1-6]

The manipulation device according to section 1-4 or 1-5, in which the change unit further executes a change process associated with sound output, in response to input of a manipulation of the button used for manipulating the application together with the manipulation of the first button.

This manipulation device further enables the user to change a mode of sound output by use of the button used for manipulating the application.

### [Section 1-7]

The manipulation device according to any one of sections 1-1 to 1-3, in which
the second button includes a direction key and a specific button different from the direction key, and
the change unit switches, in response to input of a manipulation of the specific button together with the manipulation of the first button, the setting information to be applied to the manipulation of the manipulation device, and executes, in response to input of a manipulation of the direction key together with the manipulation of the first button, a change process associated with a setting item whose value successively changes.

This manipulation device can achieve a process for a change to an environment fitting the type of the button corresponding to the manipulation target, such as the specific button and the direction key (e.g., switching of the setting information, and a change process associated with a setting item whose value successively changes).

### [Section 1-8]

The manipulation device according to any one of sections 1-1 to 1-3, in which
the second button includes a plurality of types of buttons, and, according to the type of the second button of which a manipulation is input together with input of the manipulation of the first button, the change unit switches the setting information to be applied to the manipulation of the manipulation device or executes a change process associated with sound output.

This manipulation device can achieve a process for a change to an environment fitting the type of the button corresponding to the manipulation target (e.g., switching of the setting information, and a change process associated with sound output).

### [Section 1-9]

A manipulation device including:
a first button;
a second button different from the first button;
a storage unit that stores setting information associated with a manipulation of the manipulation device; and
a processor, in which
the processor switches setting information to be applied to a manipulation of the manipulation device, in response to input of a manipulation of the second button together with a manipulation of the first button.

This manipulation device enables the user to swiftly switch the setting information applied to the manipulation, thereby improving usability of the manipulation device.

### [Section 1-10]

An information processing system including:
an information processing device that executes an application; and
a manipulation device, in which
the manipulation device includes
a first button,
a second button different from the first button,
a storage unit that stores setting information associated with a manipulation of the manipulation device,
a generation unit that generates, in reference to the setting information, manipulation information indicating a manipulation performed by a user, and
a change unit that switches setting information to be applied to the manipulation of the manipulation device, in response to input of a manipulation of the second button together with a manipulation of the first button, and
the information processing device receives the manipulation information transmitted from the manipulation device, and executes the application in reference to the manipulation information.

This information processing system executes the application in reference to the manipulation information in which the setting information selected by the user is reflected, and thereby reflects intensions and manipulations of the user in the progression of the application in a more preferable manner.

### [Section 1-11]

The information processing system according to section 1-10, in which the change unit of the manipulation device transmits to the information processing device a change instruction associated with sound output, in response to input of a manipulation of a button used for manipulating the application together with the manipulation of the first button, and
the information processing device changes a mode of sound output from a sound output device according to the change instruction associated with the sound output.

This information processing system enables the user to swiftly achieve a change associated with sound output in a form close to a change of the setting information.

### [Section 1-12]

A computer program for a manipulation device that includes a first button, a second button different from the first button, and a storage unit that stores setting information associated with a manipulation of the manipulation device, the computer program causing the manipulation device to achieve:
a function of switching setting information to be applied to the manipulation of the manipulation device, in response to input of a manipulation of the second button together with a manipulation of the first button.

This computer program enables the user to swiftly switch the setting information to be applied to the manipulation of the manipulation device, thereby improving usability of the manipulation device.

### [Section 2-1]

An information processing device including:
an acquisition unit that acquires setting information stored in a manipulation device and associated with a manipulation of the manipulation device; and
a display control unit that causes a display unit to display information associated with the setting information acquired by the acquisition unit and associated with the manipulation of the manipulation device, in response to detection of input of a predetermined manipulation using a first button provided on the manipulation device, during execution of an application.

This information processing device presents to the user information corresponding to the setting information associated with the manipulation of the manipulation device and thereby assists the user in performing manipulations associated with the setting information, in response to input of the predetermined manipulation from the user via the first button of the manipulation device during execution of the application.

### [Section 2-2]

The information processing device according to section 2-1, in which the acquisition unit acquires a plurality of pieces of setting information stored in the manipulation device and selectable by a user, and
the display control unit displays a list of the plurality of pieces of setting information as the information corresponding to the setting information associated with the manipulation of the manipulation device.

This information processing device can provide to the user the information associated with the plurality of pieces of setting information selectable by the user and thereby assist the user in selecting setting information.

### [Section 2-3]

The information processing device according to section 2-2, in which the predetermined manipulation is a holding-down manipulation of the first button.

This information processing device can provide to the user the information associated with the plurality of pieces of setting information selectable by the user according to an easy manipulation of the first button.

### [Section 2-4]

The information processing device according to section 2-2 or 2-3, in which
the plurality of pieces of setting information acquired by the acquisition unit are respectively associated with the different second buttons provided on the manipulation device, and
the list includes information indicating the second buttons respectively associated with the plurality of pieces of setting information.

This information processing device can assist the user in selecting desired setting information from the plurality of pieces of setting information.

### [Section 2-5]

The information processing device according to any one of sections 2-2 to 2-4, in which the list includes information associated with a shortcut allocation of a sound manipulation in addition to the plurality of pieces of setting information.

This information processing device can further assist the sound manipulation performed by the user.

### [Section 2-6]

The information processing device according to any one of sections 2-1 to 2-5, in which the display control unit displays a setting screen for the setting information as information corresponding to the setting information associated with the manipulation of the manipulation device, in response to detection of input of a manipulation of a second button different from the first button together with a manipulation of the first button.

This information processing device can provide to the user the setting screen for the setting information according to an easy manipulation by the user.

### [Section 2-7]

The information processing device according to section 2-6, in which the setting screen is a screen for selecting setting information to be stored in the manipulation device or erased from the manipulation device.

This information processing device can assist the user in selecting the setting information to be stored in the manipulation device or erased from the manipulation device.

### [Section 2-8]

The information processing device according to section 2-6, in which the setting screen is a screen for editing details of the setting information stored in the manipulation device.

This information processing device can assist the user in editing the setting information.

### [Section 2-9]

The information processing device according to section 2-8, in which, in response to detection of input of a manipulation of the second button different from the first button together with the manipulation of the first button during display of a screen of the application, and in a case where the most recently displayed setting screen for the setting information is a screen for editing details of the setting information, the display control unit displays the same screen for editing details of the setting information.

This information processing device can assist the user in efficiently editing the setting information simultaneously with checking of a result by enabling a direct screen transition between the screen of the application and the setting screen for the setting information.

### [Section 2-10]

The information processing device according to section 2-8 or 2-9, in which a button for a transition to the screen of the application currently executed is disposed on the screen for editing details of the setting information.

This information processing device can assist the user in efficiently editing the setting information simultaneously with checking of a result by enabling a direct screen transition between the screen of the application and the setting screen for the setting information.

### [Section 2-11]

The information processing device according to any one of sections 2-1 to 2-10, further including:
an update unit, in which
the display control unit displays a setting screen for the setting information as the information corresponding to the setting information associated with the manipulation of the manipulation device, and
the update unit causes the manipulation device to store setting information edited on the setting screen.

This information processing device can reflect editing details of the setting information given from the user on the setting screen in the manipulation device.

### [Section 2-12]

An information processing device including:
a processor,
the processor executing
a step of acquiring setting information stored in a manipulation device and associated with a manipulation of the manipulation device; and
a step of causing a display unit to display information associated with the setting information acquired in the acquiring step and associated with the manipulation of the manipulation device, in response to detection of input of a predetermined manipulation using a first button provided on the manipulation device, during execution of an application.

This information processing device can present to the user the information corresponding to the setting information associated with the manipulation of the manipulation device, in response to input of the predetermined manipulation from the user via the first button of the manipulation device during execution of the application, and thereby assist the user in performing manipulations associated with the setting information.

### [Section 2-13]

An information processing system including:
an information processing device that executes an application; and
a manipulation device, in which
the manipulation device stores setting information associated with a manipulation of the manipulation device, and
the information processing device includes
an acquisition unit that acquires setting information stored in the manipulation device and associated with a manipulation of the manipulation device, and
a display control unit that causes a display unit to display information corresponding to the setting information acquired by the acquisition unit and associated with the manipulation of the manipulation device, in response to detection of input of a predetermined manipulation using a first button provided on the manipulation device, during execution of the application.

This information processing system can present to the user the information corresponding to the setting information associated with the manipulation of the manipulation device, in response to input of the predetermined manipulation from the user via the first button of the manipulation device, during execution of the application, and thereby assist the user in performing manipulations associated with the setting information.

### [Section 2-14]

A computer program for causing an information processing device to achieve
a function of acquiring setting information stored in a manipulation device and associated with a manipulation of the manipulation device, and
a function of causing a display unit to display information corresponding to the setting information acquired by the acquiring function and associated with the manipulation of the manipulation device, in response to detection of input of a predetermined manipulation using a first button provided on the manipulation device, during execution of an application.

This computer program can present to the user the information corresponding to the setting information associated with the manipulation of the manipulation device, in response to the input of the predetermined manipulation from the user via the first button of the manipulation device, during execution of the application, and thereby assist the user in performing manipulations associated with the setting information.

### [Section 3-1]

An information processing system including:
a manipulation device; and
a notification unit, in which
the manipulation device stores a plurality of pieces of setting information associated with a manipulation of the manipulation device and selectable by a user, and
the notification unit has a plurality of types of feedback systems for presenting to the user a fact that the setting information to be applied to the manipulation of the manipulation device has been switched, in response to switching of the profile information.

This information processing system can provide feedback, in a form convenient for the user, concerning the fact that the setting information to be applied to the manipulation of the manipulation device has been switched, and enables the user to easily recognize the switching of the setting information.

### [Section 3-2]

The information processing system according to section 3-1, in which the plurality of types of feedback systems provide information perceived by different types of senses.

This information processing system can provide feedback in a form convenient for the user, and enables the user to easily recognize the switching of the setting information.

### [Section 3-3]

The information processing system according to section 3-1 or 3-2, in which the plurality of types of feedback systems include a feedback system providing visual information.

This information processing system can provide to the user feedback using visual information in a case where visual perception is convenient for the user.

### [Section 3-4]

The information processing system according to section 3-3, in which the visual information is displayed on a display unit of the manipulation device.

This information processing system enables the user to easily recognize switching of the setting information by displaying visual information as feedback on the manipulation device manipulated by the user.

### [Section 3-5]

The information processing system according to section 3-3, in which the visual information is displayed on a display device different from the manipulation device.

This information processing system enables the user to easily recognize switching of the setting information in a case where the user views the display device different from the manipulation device.

### [Section 3-6]

The information processing system according to section 3-3, in which the visual information is displayed on both a display unit of the manipulation device and a display device different from the manipulation device.

This information processing system enables the user to further easily recognize switching of the setting information.

### [Section 3-7]

The information processing system according to any one of sections 3-1 to 3-6, in which the plurality of types of feedback systems include a feedback system providing tactile information.

This information processing system can provide to the user feedback using tactile information in a case where tactile perception is convenient for the user.

### [Section 3-8]

The information processing system according to any one of sections 3-1 to 3-7, in which the plurality of types of feedback systems include a feedback system providing auditory information.

This information processing system can provide to the user feedback using auditory information in a case where auditory perception is convenient for the user.

### [Section 3-9]

The information processing system according to section 3-1 or 3-2, in which the notification unit provides to the user feedback using at least two of visual information, tactile information, and auditory information.

This information processing system enables the user to further easily recognize switching of the setting information.

### [Section 3-10]

The information processing system according to any one of sections 3-1 to 3-9, in which the notification unit provides to the user one or more types of the feedback selected by the user from the plurality of types of feedback.

This information processing system can provide feedback in a form selected by the user and convenient for the user.

### [Section 3-11]

An information processing system including:
a manipulation device; and
a processor, in which
the manipulation device stores a plurality of pieces of setting information associated with a manipulation of the manipulation device and selectable by a user, and,
in a case where the setting information to be applied to the manipulation of the manipulation device is switched, the processor actuates at least one feedback system selected from a plurality of feedback systems for presenting switching of the setting information to the user.

This information processing system can provide feedback, in a form convenient for the user, concerning the fact that the setting information to be applied to the manipulation of the manipulation device has been switched, and enables the user to easily recognize the switching of the setting information.

### [Industrial Applicability]

The present invention is applicable to a system including a manipulation device to which a manipulation is input.

### [Reference Signs List]

1: Information processing system
4: Display device
6: Controller
10: Information processing device
76: Manipulation button
88: Function button
100: Profile storage unit
110: Change unit
112: Notification unit
212: Profile information acquisition unit
220: Display control unit
222: Notification unit

## Claims

1. An information processing device comprising:
an acquisition unit that acquires setting information stored in a manipulation device and associated with a manipulation of the manipulation device; and
a display control unit that causes a display unit to display information corresponding to the setting information acquired by the acquisition unit and associated with the manipulation of the manipulation device, in response to detection of input of a predetermined manipulation using a first button provided on the manipulation device, during execution of an application.

2. The information processing device according to claim 1, wherein
the acquisition unit acquires a plurality of pieces of setting information stored in the manipulation device and selectable by a user; and
the display control unit displays a list of the plurality of pieces of setting information as the information corresponding to the setting information associated with the manipulation of the manipulation device.

3. The information processing device according to claim 2, wherein the predetermined manipulation is a holding-down manipulation of the first button.

4. The information processing device according to claim 2, wherein
the plurality of pieces of setting information acquired by the acquisition unit are respectively associated with different second buttons provided on the manipulation device, and
the list includes information indicating the second buttons respectively associated with the plurality of pieces of setting information.

5. The information processing device according to claim 2, wherein the list includes information associated with a shortcut allocation of a sound manipulation in addition to the plurality of pieces of setting information.

6. The information processing device according to claim 1, wherein the display control unit displays a setting screen for the setting information as the information corresponding to the setting information associated with the manipulation of the manipulation device, in response to detection of input of a manipulation of a second button different from the first button together with a manipulation of the first button.

7. The information processing device according to claim 6, wherein the setting screen is a screen for selecting setting information to be stored in the manipulation device or erased from the manipulation device.

8. The information processing device according to claim 6, wherein the setting screen is a screen for editing details of the setting information stored in the manipulation device.

9. The information processing device according to claim 8, wherein, in response to detection of input of the manipulation of the second button different from the first button together with the manipulation of the first button during display of a screen of the application, and in a case where the most recently displayed setting screen for the setting information is a screen for editing details of the setting information, the display control unit displays the same screen for editing details of the setting information.

10. The information processing device according to claim 8, wherein a button for a transition to the screen of the application currently executed is disposed on the screen for editing details of the setting information.

11. The information processing device according to claim 1, further comprising:
an update unit, wherein
the display control unit displays a setting screen for the setting information as the information corresponding to the setting information associated with the manipulation of the manipulation device, and
the update unit causes the manipulation device to store setting information edited on the setting screen.

12. An information processing device comprising:
a processor, the processor executing
a step of acquiring setting information stored in a manipulation device and associated with a manipulation of the manipulation device; and
a step of causing a display unit to display information corresponding to the setting information acquired in the acquiring step and
associated with the manipulation of the manipulation device, in response to detection of input of a predetermined manipulation using a first button provided on the manipulation device, during execution of an application.

13. An information processing system comprising:
an information processing device that executes an application; and
a manipulation device, wherein
the manipulation device stores setting information associated with a manipulation of the manipulation device, and
the information processing device includes
an acquisition unit that acquires setting information stored in the manipulation device and associated with the manipulation of the manipulation device, and
a display control unit that causes a display unit to display information corresponding to the setting information acquired by the acquisition unit and associated with the manipulation of the manipulation device, in response to detection of input of a predetermined manipulation using a first button provided on the manipulation device, during execution of the application.

14. A computer program for causing an information processing device to achieve:
a function of acquiring setting information stored in a manipulation device and associated with a manipulation of the manipulation device; and
a function of causing a display unit to display information corresponding to the setting information acquired by the acquiring function and associated with the manipulation of the manipulation device, in response to detection of input of a predetermined manipulation using a first button provided on the manipulation device, during execution of an application.
